# EUROPÄISCHE PATENTANMELDUNG

(11) **EP 0 928 957 A2**
(43) Veröffentlichungstag der Anmeldung: **14.07.1999**
(21) Anmeldenummer: 98811204.1
(22) Anmeldetag: 08.12.1998
(51) Int. Cl.: G01J 3/46, A61C 19/10

(54) **Verfahren sowie Vorrichtung zur Bestimmung der Farbvalenz von Objekten**

(30) Priorität: 09.01.1998 CH 2798
(71) Anmelder: MHT Optic Research AG, 8155 Niederhasli (CH)
(72) Erfinder: Berner, markus, 8155 Niederhasli (CH)
(74) Vertreter: Rottmann, Maximilian R.

(57) **Zusammenfassung**

Um die Farbvalenz eines transluzenten Messobjekts (7), bestimmen zu können, wird vorgeschlagen, das Messobjekt (7) mit Licht (16) in unterschiedlichen Wellenlängenbereichen zu beleuchten oder das vom Messobjekt (7) reflektierte Licht (29) vor der Erfassung mit einem Bildsensor (23) in unterschiedliche Wellenlängenbereiche aufzuteilen. Um einen Sondenkopf (5) exakt an das Messobjekt (7) heranführen zu können, wird das Messobjekt (7) mittels eines weiteren Bildsensors (22) visualisiert. Vorzugsweise werden zwei Bildsensoren (22, 23) eingesetzt, wobei der eine Bildsensor (22) zum Visualisieren des Messobjekts (7) und der andere Bildsensor (23) zum Ermitteln der farbmetrischen Daten des Messobjekts (7) verwendet wird. Auf diese Weise kann die Farbvalenz des Messobjekts (7) sehr genau bestimmt werden. Zudem kann ein solches Verfahren mitsamt der zugehörigen Vorrichtung einfach realisiert werden.

## Beschreibung

Die Erfindung betrifft ein Verfahren zur Bestimmung der Farbvalenz Von Objekten nach dem Oberbegriff des Anspruchs 1 sowie eine Vorrichtung zur Durchführung des Verfahrens nach dem Oberbegriff des Anspruchs 29.

Das Problem bei der Farbbestimmung von Objekten besteht darin, dass einerseits die Fläche, auf der das vom Messobjekt reflektierte Licht erfasst wird, nicht unendlich gross sein kann, und dass andererseits auch die Fläche des auf den Messkörper projizierten Lichtflecks eine beschränkte Ausdehnung aufweist. Dadurch entsteht in der Praxis ein Messfehler und zwar deshalb, weil der von aussen in den Messfleck eingekoppelte und von der optischen Erfassungseinrichtung aufgenommene Lichtstrom nicht gleich gross ist wie der den Messfleck verlassende Lichtstrom.

Diese Problematik wird bei transluzenten Messobjekten noch akzentuiert, weil ein Teil des Lichtes den Messfleck durch den transluzenten Messkörper hindurch verlässt und weil auch von aussen Licht in den Messkörper und damit in den Messfleck eindringt.

Dieser Messfehler führt dazu, dass mit den heute bekannten Systemen die Farbvalenz von unbekannten Messkörpern nur unzureichend bestimmt werden kann.

Die zur Bestimmung der Farbvalenz von Zähnen bekannten Geräte arbeiten nach dem folgenden Prinzip:

Es wird ein kleiner Messkopf auf den Zahn aufgesetzt. Aufgrund der Position des Messkopfs ist dem Anwender, z.B. dem Zahnarzt, klar, welche Position des Zahnes er misst. Eine genaue Positionierung des Messkopfs ist insofern wichtig, als der Zahn keine einheitliche Farbe aufweist. Um die Farbe in verschiedenen Zonen zu messen, muss der Zahnarzt das Gerät an verschiedenen Stellen positionieren und jeweils eine Messung auslösen.

Die Beleuchtung und Messung der Farbe erfolgen beide innerhalb des kleinen Messkopfs. Infolge der Transluzenz der Zähne ist die Messung dadurch, wie vorgängig erläutert, primär fehlerhaft. Mit irgendwelchen optischen und/oder mathematischen Tricks werden nun diese Fehler korrigiert. Das Endresultat ist aber immer noch nicht befriedigend.

Es ist daher die Aufgabe der Erfindung, ein Verfahren zur Bestimmung der Farbvalenz von Objekten gemäss dem Oberbegriff des Anspruchs 1 vorzuschlagen, welches auf einfache Art realisierbar ist, und mittels welchem die Farbvalenz eines Objekts genau bestimmt werden kann.

Diese Aufgabe wird durch das im Kennzeichen des Anspruchs 1 definierte Verfahren gelöst.

Durch das vorgeschlagene Verfahren, bei dem das Messobjekt zur Durchführung einer Messphase mit Licht in unterschiedlichen Wellenlängenbereichen beleuchtet oder das vom Messobjekt reflektierte Licht vor der Erfassung durch den Bildsensor in unterschiedliche Wellenlängenbereiche aufgeteilt wir:::l, wird die Voraussetzung für ein einfach durchzuführendes Verfahren geschaffen, indem auf die sonst übliche spektrale Auswertung des erfassten Lichts mittels eines Spektrofotometers verzichtet werden kann. Auch kann durch dieses Verfahren die Farbvalenz des Messobjekts in bezug auf die menschliche Wahrnehmung genauer als bisher ermittelt werden.

Bevorzugte Ausführungsarten des Verfahrens sind in den abhängigen Ansprüchen 2 bis 28 umschrieben.

Bei einer bevorzugten Ausführungsart des Verfahrens wird vorgeschlagen, dass das Messobjekt auf dem Bildsensor abgebildet und die vom Bildsensor gelieferten Signale visualisiert werden. Dadurch wird das Durchführen der Messung vereinfacht und der Bedienkomfort erhöht, indem für den Anwender das Positionieren des für die Erfassung des reflektierten Lichts benötigten Sondenkopfs, unabhängig von dessen Grösse, erleichtert wird.

Eine weitere Aufgabe der Erfindung besteht darin, eine Vorrichtung zur Durchführung des Verfahrens vorzuschlagen.

Diese Vorrichtung wird im Anspruch 29 definiert.

Bevorzugte Ausführungsformen der Vorrichtung sind in den abhängigen Ansprüchen 30 bis 41 umschrieben.

Nachfolgend wird das erfindungsgemässe Verfahren zusammen mit einer bevorzugten Ausführung der Vorrichtung zur Durchführung des Verfahrens anhand einer Zeichnung näher erläutert.

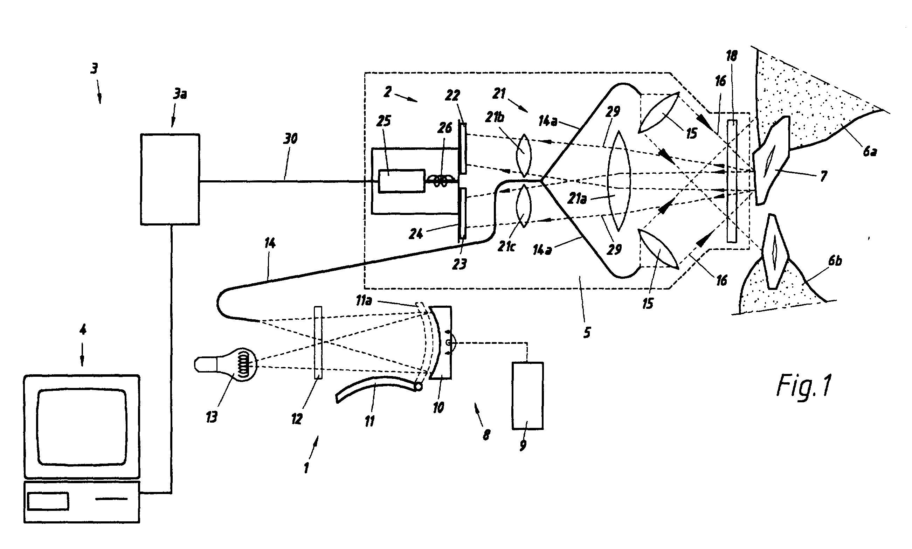

Anhand der einzigen Figur, welche eine prinzipielle Darstellung der Vorrichtung zeigt, wird der Aufbau und die Wirkungsweise der Vorrichtung näher erläutert. Da sich die vorliegende Vorrichtung insbesondere zur Bestimmung der Farbvalenz von Zähnen eignet, ist ein Teilschnitt durch einen Ober- und Unterkiefer 6a, 6b eines Menschen eingezeichnet, wobei als eigentliches Messobjekt ein oberer Schneidezahn 7 ausgewählt wird. Es gilt zu berücksichtigen, dass die vorliegende Zeichnung die Erfindung schematisch und nicht massstabsgetreu wiedergibt.

Die Vorrichtung umfasst im wesentlichen eine Beleuchtungseinrichtung 1, eine Erfassungseinrichtung 2 sowie eine Auswerteeinrichtung 3. Ausgewählte Teile dieser Vorrichtung sind in einem Sondenkopf 5 aufgenommen, der für die Messung an das Messobjekt 7 herangeführt wird.

Der Sondenkopf 5 ist vorzugsweise auswechselbar, so dass ggf. ein anderer, an die spezifischen Anforderungen angepasster Sondenkopf eingesetzt werden kann. Wenn beispielsweise das Messobjekt nur visualisiert werden soll, ohne dass die farbmetrischen Daten ermittelt werden müssen, so kann ein vergleichsweise kleiner und handlicher Sondenkopf eingesetzt werden, da ein derartiger Sondenkopf einige Elemente weniger aufzunehmen braucht.

Die Beleuchtungseinrichtung 1 weist eine Lichtquelle 13, ein UV-Sperrfilter 12, einen Hohlspiegel 11, einen Farbseparator 8, ein Lichtleiterfaserbündel 14 sowie Linsen 15 auf. Der als Monochromator ausgebildete Farbseparator 8 umfasst einen Elektromotor 9 sowie einen Hohlspiegel 10 mit einem Beugungsgitter. Der mit einem Beugungsgitter versehene Hohlspiegel 10 kann mittels des Elektromotors 9 um eine senkrecht zur Zeichnungsebene verlaufende Achse gedreht werden. Zwischen der Lichtquelle in Form einer Lampe 13 und dem Monochromator 8 ist ein UV-Sperrfilter 12 eingeschaltet, währenddem zwischen dem UV-Sperrfilter 12 und dem Monochromator 8 ein konventioneller Hohlspiegel 11 ohne Gitterstruktur angeordnet ist. Der Hohlspiegel 11 ohne Gitterstruktur ist über nicht näher dargestellte Mittel zwischen einer Ruhe- und einer Wirkstellung 11a verschwenkbar. Die Lampe 13, das UV-Sperrfilter 12, der Hohlspiegel 11 sowie der Monochromator 8 sind ausserhalb des Sondenkopfs 5 angeordnet, währenddem das Lichtleiterfaserbündel 14 in den Sondenkopf 5 hineingeführt ist und diesen optisch mit der Lampe 13 koppelt.

Das Lichtleiterfaserbündel 14 ist im Sondenkopf 5 endseitig in einzelne Fasern 14a aufgeteilt. Um eine möglichst homogene Ausleuchtung des Messobjekts 7 zu erhalten, sind die Enden der einzelnen Fasern 14a kreisringförmig angeordnet. Die nachgeschalteten Linsen 15 tragen dabei zusätzlich zur gleichmässigen Ausleuchtung des Messobjekts 7 bei. Vorteilhafterweise wird jedoch nicht nur das Messobjekt 7 selber, sondern es werden auch noch die angrenzenden Bereiche des Ober- und Unterkiefers 6a, 6b beleuchtet, wodurch die eingangs erwähnte Problematik bei der Farbmessung an transluzenten Körpern weitgehend eliminiert werden kann. Aufgrund der Transluzenz des Messobjekts 7 ist es jedenfalls wichtig, dass die beleuchtete Fläche grösser ist als die für die Bestimmung der Farbvalenz des Messobjekts 7 erfasste Fläche.

Die Erfassungseinrichtung 2 umfasst im wesentlichen eine zentral im Sondenkopf 5 angeordneten Linsenanordnung 21 sowie zwei Bildsensoren 22, 23. Obwohl hier nur drei zur Linsenanordnung 21 gehörende Linsen 21a, 21b, 21c dargestellt sind, wird in der Praxis ein komplexeres, korrigiertes Objektiv eingesetzt, welches der Einfachheit halber nachfolgend jeweils als Linsenanordnung 21 bezeichnet wird. Schliesslich umfasst die Auswerteeinrichtung 3 einen Videoschaltkreis 3a sowie einem mit einem Bildschirm versehenen Rechner 4 in Form eines Personalcomputers. Als Bildsensoren 22, 23 werden im vorliegenden Fall CCD-Chips (Charge Coupled Device) verwendet, wobei der eine Bildsensor einen Farb-Chip 22 und der andere einen Schwarz-Weiss-Chip 23 aufweist. Beide Bildsensoren 22, 23 sind über eine Datenleitung 30 mit dem Videoschaltkreis 3a verbunden. Im weiteren ist der Sondenkopf 5 mit einem Polarisator 18 versehen, dessen Aufbau und Wirkungsweise anschliessend noch näher erläutert wird.

Zum Durchführen einer Messphase, bei welcher die Farbvalenz des Messobjekts 7 bestimmt wird, muss sich der konventionelle Hohlspiegel 11 in der nach unten geschwenkten Ruhestellung befinden, so dass das von der Lampe 13 emittierte Licht von dem mit dem Beugungsgitter versehenen Hohlspiegel 10 in das Lichtleiterfaserbündel 14 eingekoppelt wird. Durch das Verdrehen des mit einem Beugungsgitter versehenen Hohlspiegels 10 wird der in das Lichtleiterfaserbündel 14 eingekoppelte Wellenlängenbereich verändert, im vorliegenden Fall wird durch das Verdrehen des Hohlspiegels 10 um ca. 15° das von der Lampe 13 emittierte Licht selektiv im Wellenlängenbereich zwischen ca. 380 und 730 Nanometern (sichtbares Licht) vom Hohlspiegel 10 in das Lichtleiterfaserbündel 14 eingekoppelt. Das vom Messobjekt 7 auf den Schwarz-Weiss-Sensor 23 reflektierte Licht wird als Bild erfasst und rechnerisch dem Wellenlängenbereich zugeordnet, mit welchem das Messobjekt 7 von der Beleuchtungseinrichtung beleuchtet wurde. Diese Erfassung erfolgt in Abständen, wobei sich beispielsweise eine Abstufung von 10 Nanometern als vorteilhaft erwiesen hat, so dass insgesamt 36 verschiedene spektrale Stützstellen im Bereich des sichtbaren Lichts erfasst und ausgewertet werden.

Der Hohlspiegel 10 kann auch in eine Position geschwenkt werden, wo kein von der Lampe 13 emittiertes, das UV-Sperrfilter 12 durchdringendes Licht in das Lichtleiterfaserbündel 14 eingekoppelt wird. Wenn sich der Monochromator 8 in dieser Dunkel-Position befindet, kann eine Dunkelkorrektur der Vorrichtung vorgenommen werden. Das bedeutet, dass der an den Bildsensoren 22, 23 zu diesem Zeitpunkt anstehende Messwert dem von aussen in das Messobjekt 7 bzw. die Erfassungseinrichtung 2 eingekoppelten Licht (Umgebungslicht) entspricht. Damit die an den Bildsensoren 22, 23 anstehenden Messwerte durch das von aussen eingekoppelte Licht nicht verfälscht werden, wird dieser Dunkelwert jeweils vom eigentlichen Messwert subtrahiert.

Um eine flächige und homogene Ausleuchtung des Messobjekts 7 zu erreichen, muss der Sondenkopf einen bestimmten Mindestdurchmesser aufweisen. Für die Farbmessung an Zähnen weist der Sondenkopf 5 vorzugsweise einen Durchmesser von ca. 2 bis 3 cm auf. Da ein Sondenkopf 5 dieser Grösse jedoch die zu messende Region völlig abdeckt, kann die Position des Sondenkopfs mittels des Farbsensors 22 visualisiert werden, damit der Zahnarzt weiss, wo genau das Gerät misst bzw. messen wird.

Zum Visualisieren des Messobjekts 7 wird der Spiegel 11 in die Wirkstellung 11a eingeschwenkt, wodurch das Licht der Lampe 13 am Eintrittsspalt auf das Lichtleiterbündel 14 am Austrittsspalt abgebildet wird. In der Praxis stellt es sich so dar, dass sich der Hohlspiegel 11 praktisch immer in der eingeschwenkten Wirkstellung 11a befindet, wodurch das Messobjekt 7 mittels des Farbsensors 22 visualisierbar ist. Zum Durchführen einer Messphase wird der Spiegel 11 zuerst ausgeschwenkt, dann die eigentliche FarbvalenzMessung mittels des Schwarz-Weiss-Sensors 23 durchgeführt und der Spiegel 11 danach wieder eingeschwenkt.

Die beiden Bildsensoren 22, 23 sind auf einer gemeinsamen Trägerplatte 24 angeordnet, welche über eine Spindel 26 mit einem Stellantrieb 25 verbunden ist. Durch das Vorsehen von zwei Bildsensoren 22, 23 kann auf einfache Art und Weise eine Autofokus-Funktion realisiert werden, mittels welcher die Bildsensoren 22, 23 automatisch in die Bildebene der Linsenanordnung 21 verfahren werden. Aufgrund der zwischen den beiden Bildsensoren 22, 23 entstehenden Parallaxe kann der Abstand des Messobjekts errechnet und die Bildsensoren 22, 23 in die Bildebene der Linsenanordnung 21 verfahren werden, so dass das Messobjekt 7 "scharf" auf den beiden Bildsensoren 22, 23 abgebildet wird. Die Messrate, mit der die am Schwarz-Weiss-Bildsensor 23 anstehende Helligkeitsinformation -Intensität des Grauwerts- vom Videoschaltkreis 3a eingelesen wird, ist mit der Drehgeschwindigkeit des Hohlspiegels 10 synchronisiert. Der Einfachheit halber ist nur eine Verbindungsleitung 30 zwischen dem Sondenkopf 5 und der Auswerteeinrichtung 3 eingezeichnet. Es versteht sich jedoch, dass in Wirklichkeit ein mehradriges Kabel zum Einsatz kommt, mittels welchem die verschiedenen Elemente 22, 23, 25 im Sondenkopf 5 mit der Auswerteeinrichtung 3 elektrisch und/oder ggf. optisch verbunden sind.

Um den Oberflächenglanz des Messobjekts 7 zu eliminieren, hat es sich als vorteilhaft erwiesen, vor dem Messobjekt 7 noch eine Polfilterkombination 18 einzufügen. Eine Polfilterkombination 18 ist insbesondere bei der Bestimmung der Farbvalenz von Zähnen wichtig, da die Zähne an ihren Unebenheiten glänzen und so schlecht reproduzierbare Messresultate produzieren. Die Polfilterkombination wird vorzugsweise so angeordnet, dass sowohl das von der Lampe 13 emittierte Licht 16 wie auch das vom Messobjekt 7 reflektierte Licht 29 diese Polfilterkombination 18 durchdringen muss.

Es bestehen zwei mögliche Polfilterkombinationen 18, die diese Aufgabe erfüllen: Einerseits kann die Polfilterkombinationen 18 aus zwei Linearpolarisatoren aufgebaut werden, wobei das Licht der Lampe 13 den Polarisator und das vom Messobjekt 7 reflektierte Licht den Analysator durchdringt. In dieser Anordnung müssen Polarisator und Analysator um 90° gegeneinander verdrehte Polarisationsrichtungen aufweisen (->Variante a).

Anderseits kann die Polfilterkombinationen aus einem Linearpolarisator und einem Zirkularpolarisator aufgebaut werden. Die beiden Polarisatoren sind hintereinander anzuordnen, wobei der Zirkularpolarisator dem Messobjekt zugewandt werden muss. In dieser Anordnung muss das Licht der Lampe 13 und das vom Messobjekt 7 reflektierte Licht beide Polarisatoren durchdringen (->Variante b).

In vorliegenden Ausführungsbeispiel wurde der Variante a den Vorzug gegeben, da sich damit mit den heute verfügbaren Polarisatoren eine bessere Glanzunterdrückung ergibt.

Da es für die Farbbestimmung auch eines farblich inhomogenen Zahnes genügt, diesen mit einer messtechnischen Auflösung von 20x20 Punkten in horizontaler und vertikaler Richtung zu erfassen, können die Messdaten mehrerer Pixel des CCD-Chips 23 zusammengefasst und gemittelt werden. Wenn beispielsweise von einem heutzutage gebräuchlichen CCD-Chip mit einer Auflösung von 480x640 Pixeln ausgegangen wird, so können (480/20)x(640/20) = 24x32 Pixel durch Mittelung zu einem einzigen Bildpunkt zusammengefasst werden. Durch diese Mittelung sinkt das Rauschen um die Wurzel aus 768 = 28, was bedeutet, dass durch die Mittelung das Rauschen 28 mal geringer wird. Durch diese Mittelung wird ausserdem das Signal / Rauschverhältnis um den Faktor 28 auf einen Wert angehoben, der für eine zuverlässige Auswertung vollauf genügend ist.

Um die Datenflut zu verringern, kann je nach Anwendungsbedarf die Anzahl Bildpunkte auch reduziert werden.

Um unterscheiden zu können, ob die erfassten Signale vom Zahn 7 selber oder von angrenzenden Bereichen des Messobjekts stammen, wird der Zahn 7 in seiner Lage und Geometrie erfasst. Dazu wird eine Kantendetektion vorgenommen, indem rechnerisch die hell-dunkel-Übergänge (Spalt zwischen den Zähnen sowie Schneide des Zahns) und die hell-rot-Übergänge (Übergang zwischen Zahn und Zahnfleisch) gesucht werden, wobei davon ausgegangen werden kann, dass die Lage der Zähne in etwa bekannt ist. Nachdem die Ausdehnung und Lage des Zahns ermittelt sind, brauchen nur noch die vom Zahn selber stammenden Bilder (Helligkeitsinformationen) weiter verarbeitet zu werden.

Die auf diese Weise erhaltenen Bilder werden nun noch entzittert, indem zwischen den Zeilen der einzelnen Bilder der verschiedenen Wellenlängen die Kreuzkorrelation gebildet und die verschiedenen Bilder solange zueinander verschoben werden, bis die Kreuzkorrelation maximal ist. Diese Kreuzkorrelation wird für beide Bild-Achsen sowie für alle erfassten Wellenlängenbereiche durchgeführt.

Aufgrund dieser Messwerte können schliesslich die farbmetrischen Daten des Messobjekts an allen 400 Bildpunkten bestimmt werden.

Von den 400 ermittelten Bildpunkten können nun rechnerisch diejenigen aneinander angrenzende Bildpunkte zu Farbzonen zusammengefasst werden, deren Farbabweichung einen vorbestimmten Wert nicht überschreiten. Auf diese Weise kann das Messobjekt in mehrere Farbzonen unterschiedlicher Farbvalenz aufgeteilt werden. Die maximale Anzahl solcher Farbzonen wird insbesondere durch praktische Gesichtspunkte beschränkt, da ein Zahntechniker einen Ersatzzahn üblicherweise nur in eine begrenzte Anzahl Farbzonen aufteilt.

Natürlich ist es auch möglich, dem farbmetrisch vermessenen Zahn eine einheitliche Farbvalenz zuzuordnen. Dazu wird vorzugsweise der Mittelwert aus den ermittelten Bildpunkten auf dem Zahn errechnet, der dann als relevante Grösse zur Ermittlung einer einheitlichen Farbe herangezogen werden kann.

Durch das messtechnische Aufteilen des Messobjekts in eine Vielzahl von Messpunkten eröffnet sich eine Vielzahl von neuen Möglichkeiten, die insbesondere bei der Farbbestimmung von Zähnen eine wichtige Rolle spielen. Beispielsweise kann auf diese Weise ein Zahn erstmals in mehrere Zonen unterschiedlicher Farbvalenz aufgeteilt werden. Damit dürfte sich zum erstenmal ein Schneidezahn, der zwangsläufig eine Vielzahl unterschiedlicher Schattierungen aufweist, farblich sehr genau nachbilden lassen.

Nachfolgend wird eine nicht Anspruch auf Vollständigkeit erhebende Liste wiedergegeben, aus der einige der Möglichkeiten hervorgehen, die sich mit dem vorliegenden Verfahren ergeben:
1. Darstellung des Videobildes auf dem Monitor zwecks Positionierung des Messkopfs bzw. zwecks Funktionalität des Systems als Intraoral-Kamera.
2. Weiss- und Dunkelkorrektur der Videobilder.
3. Farbkorrektur der Videobilder.
4. Autofocus-Funktion.
5. Abspeichem der Videobilder in einer Datenbank.
6. Abrufen der Videobilder aus der Datenbank.
7. Einblenden von Massstäben in das Videobild.
8. Weiss- und Dunkelkorrektur der spektralen Daten.
9. Zuordnung der Farbcodes der Farben von Prothesen - Materialien an jedem Punkt im Videobild.
10.Berechnung eines einheitlichen, mittleren Farbcodes für das gesamte Messobjekt (Zahn).
11.Ermitteln von mehreren Zonen mit einer einheitlichen Farbwahl.
12.Simulation von Farbwahlen auf dem Videobild.
13.Vergleiche gleicher Bilder verschiedenen Datums: Übereinanderlegen der Bilder
14.Berechnung der Farbänderung über die Zeit an bestimmten Punkten auf dem Zahn bzw. auf dem Zahnfleisch.
15.Berechnung der Zahnfleischrückbildung.
16.Übermittlung der Daten an den Zahntechniker.

Die meisten der obigen Punkte sind vor allem bei der Zahnmessung sinnvoll. Einige Punkte sind aber auch bei anderen Applikationen wichtig, z.B. die Punkte 1 - 3: Bei verschiedenen Anwendungen ist die absolute Farbe des Videobildes von Interesse; z.B. bei der Endoskopie sieht der Arzt anhand der Farbe des Blutes den Sauerstoffgehalt. Bei heutigen Video-Endoskopen kann er diese Information aber nicht dem Videobild entnehmen.

Um die gesamte Messkette kalibrieren zu können, werden zudem periodisch an einer Referenzprobe Referenzmessungen durchgeführt. Eine solche Referenzprobe kann z.B eine farblich homogene, weissliche Probe sein. Die dabei erfassten Werte werden als Referenzwerte abgespeichert und zur Kalibrierung der Messkette verwendet. In der Praxis wird empfohlen, täglich eine solche Referenzmessung durchzuführen. Die Referenzprobe ist jedoch nicht eingezeichnet.

Nebst der eigentlichen Bestimmung der farbmetrischen Daten wird das Messobjekt jedoch auch visualisiert, wodurch die Positionierung des Sondenkopfs wesentlich vereinfacht wird. Die Visualisierung erfolgt vorzugsweise auf dem PC-Bildschirm. Diese Visualisierung ist insofern wichtig, als der Sondenkopf einen relativ grossen Bereich abdeckt und der Zahnarzt daher nicht weiss, wo genau er den Sondenkopf plaziert hat bzw. plazieren muss. Mit einer Visualisierung jedoch kann der Sondenkopf sehr genau an die gewünschte Stelle bewegt werden und die Positionen der 400 Punkte mit den farbmetrischen Werten sind genau bekannt.

Nebst dem vorgängig erläuterten Ausführungsbeispiel sind im Rahmen der in den Patentansprüchen definierten Verfahrensschritte und Ausführungsformen noch eine Vielzahl von weiteren Varianten der Erfindung denkbar. Beispielsweise könnte die spektrale Auflösung der Beleuchtung dramatisch reduziert werden. Dabei genügt es, wenn das Messobjekt mit zumindest drei unterschiedlichen Wellenlängen bzw. Wellenlängenbereichen beleuchtet oder das vom Messobjekt reflektierte Licht vor der Erfassung mit dem Bildsensor in zumindest drei unterschiedlichen Wellenlängen bzw. Wellenlängenbereiche aufgeteilt wird. Das entspricht dann einer Colorimeter-Anordnung. Es versteht sich, dass die Wellenlängenbereiche bzw. die Intensität der Wellenlängenbereiche definitionsgemäss so gewählt werden, dass eine Berechnung der farbmetrischen Daten des Messobjekts ermöglicht wird.

Beispielsweise könnte als Farbseparator anstelle eines Monochromators auch ein rotierendes Filterrad, ein rotierendes Verlaufsfilter oder ein akustisch einstellbares, optisches Filter verwendet werden. Ein solcher Farbseparator muss ausserdem nicht zwingend in die Beleuchtungseinrichtung eingefügt werden, sondern er könnte ebensogut vor dem Bildsensor angeordnet werden. Die anhand der beiliegenden Zeichnungen vorgängig erläuterte Variante hat sich insbesondere aus praktischen Gründen bewährt, da durch das Anordnen des Farbseparators ausserhalb des Sondenkopfs dieser physisch kleiner gehatten werden kann, als wenn der Farbseparator im Sondenkopf eingefügt werden müsste. Schliesslich könnten aufgrund der vom Bildsensor gelieferten Messwerte von jedem Pixel die farbmetrischen Daten berechnet werden. Anstelle der Messdaten könnten dann direkt die farbmetrischen Daten der einzelnen Pixel abgespeichert werden.

Eine alternative Ausführungsform der Vorrichtung bzw. des Verfahrens könnte schliesslich auch darin bestehen, dass anstelle von zwei Bildsensoren nur einer eingesetzt wird. Die vom Sensor gelieferten Signale könnten dann sowohl zur Bestimmung der farbmetrischen Daten wie auch zu Positionierung des Sondenkopfs herangezogen werden.

## Patentansprüche

1. Verfahren zur Bestimmung der Farbvalenz von Objekten (7), insbesondere von transluzenten Objekten, wobei das Messobjekt (7) beleuchtet und das von diesem reflektierte Licht (29) über zumindest einen Bildsensor (22, 23) erfasst wird und die farbmetrischen Daten des Messobjekts (7) mittels einer geeigneten Auswerteeinrichtung (3) ermittelt werden, dadurch gekennzeichnet, dass das Messobjekt (7) zur Durchführung einer Messphase mit Licht (16) in unterschiedlichen Wellenlängenbereichen beleuchtet oder das vom Messobjekt (7) reflektierte Licht (29) vor der Erfassung durch den Bildsensor (22, 23) in unterschiedliche Wellenlängenbereiche aufgeteilt wird.

2. Verfahren nach Anspruch 1, dadurch gekennzeichnet, dass das Messobjekt (7) auf dem Bildsensor (22, 23) abgebildet wird und die vom Bildsensor (22, 23) gelieferten Signale visualisiert werden.

3. Verfahren nach Anspruch 1 oder 2, dadurch gekennzeichnet, dass zwei Bildsensoren (22, 23) verwendet werden, wobei der eine Bildsensor (22) zum Visualisieren des Messobjekts (7) und der andere Bildsensor (23) zum Ermitteln der farbmetrischen Daten des Messobjekts (7) verwendet wird.

4. Verfahren nach Anspruch 3, dadurch gekennzeichnet, dass zum Visualisieren des Messobjekts (7) ein Farbsensor (22) und zum Ermitteln der farbmetrischen Daten des Messobjekts (7) ein Schwarz-Weiss-Sensor (23) verwendet wird.

5. Verfahren nach einem der Ansprüche 2 bis 4, dadurch gekennzeichnet, dass das Messobjekt (7) zur Visualisierung mit sichtbarem Licht mit einem relativen Wellenlängenbereich von zumindest 300 Nanometern beleuchtet wird.

6. Verfahren nach einem der vorhergehenden Ansprüche, dadurch gekennzeichnet, dass zum Erzeugen der unterschiedlichen Wellenlängenbereiche ein Monochromator (8) verwendet wird.

7. Verfahren nach Anspruch 3, dadurch gekennzeichnet, dass aufgrund der an den Bildsensoren (22, 23) anstehenden Signale die Lage der das Messobjekt (7) scharf abbildenden Bildebene errechnet wird, und dass die Bildsensoren (22, 23) in diese Bildebene bewegt werden.

8. Verfahren nach einem der vorhergehenden Ansprüche, dadurch gekennzeichnet, dass das Messobjekt (7) gleichmässig und flächig beleuchtet wird.

9. Verfahren nach einem der vorhergehenden Ansprüche, dadurch gekennzeichnet, dass das auf das Messobjekt (7) emittierte und das vom Messobjekt (7) reflektierte Licht (29) zwecks Glanzunterdrückung polarisiert wird.

10. Verfahren nach Anspruch 8 oder 9, dadurch gekennzeichnet, dass eine Fläche beleuchtet wird, welche grösser ist als die von den Bildsensoren (22, 23) erfasste und für die Bestimmung der Farbvalenz massgebende Fläche.

11. Verfahren nach einem der vorhergehenden Ansprüche, dadurch gekennzeichnet, dass die Visualisierung der vom Bildsensor (22) gelieferten Signale zur Positionierung eines mit Elementen (21, 22, 23, 25) für die Erfassung des vom Messobjekts (7) reflektierten Lichts (29) versehenen Sondenkopfs (5) herangezogen wird.

12. Verfahren nach einem der Ansprüche 6 bis 11, dadurch gekennzeichnet, dass für den jeweils auszuwertenden Wellenlängenbereich, in Bezug auf das reflektierte Licht (29) und zum Ermitteln der farbmetrischen Daten des Messobjekts (7), nur die Intensität des Grauwerts vom Schwarz-Weiss-Sensor (23) gemessen wird.

13. Verfahren nach einem der vorhergehenden Ansprüche, dadurch gekennzeichnet, dass für die unterschiedlichen Wellenlängenbereiche eine Bandbreite von 5 bis 20 Nanometern gewählt wird.

14. Verfahren nach einem der vorhergehenden Ansprüche, dadurch gekennzeichnet, dass das Messobjekt (7) mit zumindest drei unterschiedlichen Wellenlängenbereichen beleuchtet wird, oder dass das vom Messobjekt (7) reflektierte Licht (29) vor der Erfassung mit dem Bildsensor (23) in zumindest drei unterschiedliche Wellenlängenbereiche aufgeteilt wird, wobei die Intensitätsverteilung der Wellenlängenbereiche so gewählt wird, dass eine Berechnung der farbmetrischen Daten ermöglicht wird.

15. Verfahren nach Anspruch 13 oder 14, dadurch gekennzeichnet, dass im Bereich von sichtbarem Licht gemessen wird.

16. Verfahren nach einem der vorhergehenden Ansprüche, dadurch gekennzeichnet, dass die über den Bildsensor (23) erfassten Intensitätsinformationen für jeden Wellenlängenbereich separat abgespeichert werden.

17. Verfahren nach einem der vorhergehenden Ansprüche, dadurch gekennzeichnet, dass aufgrund der vom Bildsensor (23) gelieferten Messwerte von jedem Pixel die farbmetrischen Daten berechnet werden.

18. Verfahren nach einem der vorhergehenden Ansprüche, dadurch gekennzeichnet, dass aufgrund der vom Bildsensor (23) gelieferten Messwerte die für die farbmetrische Auswertung relevante Fläche des Messobjekts (7) bestimmt wird.

19. Verfahren nach einem der vorhergehenden Ansprüche, dadurch gekennzeichnet, dass jeweils eine bestimmte Anzahl Pixel des Bildsensors (23) durch Mittelung zu einem Bildpunkt zusammengefasst wird.

20. Verfahren nach Anspruch 19, dadurch gekennzeichnet, dass die Messfläche durch Zusammenfassen von Bildpunkten horizontal und vertikal in eine vorbestimmte Anzahl Farbpunkte aufgeteilt wird.

21. Verfahren nach Anspruch 19 oder 20, dadurch gekennzeichnet, dass eine Mehrzahl von Farbpunkten zu Farbzonen mit einer einheitlichen Farbe zusammengefasst wird, wobei das Messobjekt (7) in eine Vielzahl von unterschiedlichen Farbzonen aufgeteilt wird.

22. Verfahren nach Anspruch 19 oder 20, dadurch gekennzeichnet, dass aus den durch Mittelung zusammengefassten Bildpunkten oder Farbzonen der Mittelwert gebildet und als relevante Grösse zur Berechnung einer einheitlichen Farbvalenz herangezogen wird.

23. Verfahren nach einem der vorhergehenden Ansprüche, dadurch gekennzeichnet, dass zwischen den pro separierter Wellenlänge bzw. pro separiertem Wellenlängenbereich vom Bildsensor (23) erfassten Messwerten die Kreuzkorrelation gebildet wird.

24. Verfahren nach Anspruch 23, dadurch gekennzeichnet, dass die Kreuzkorrelation für alle erfassten Wellenlängen bzw. Wellenlängenbereiche durchgeführt wird.

25. Verfahren nach einem der vorhergehenden Ansprüche, dadurch gekennzeichnet, dass die von der Auswerteeinrichtung (3) ermittelten Daten zur Farbkorrektur des visualisierten Messobjekts (7) verwendet werden.

26. Verfahren nach einem der vorhergehenden Ansprüche, dadurch gekennzeichnet, dass die von der Auswerteeinrichtung (3) ermittelten Daten mit den Farben von Referenzskalen verglichen und den jeweils ähnlichsten Farben der Referenzskalen zugeordnet werden.

27. Verfahren nach einem der vorhergehenden Ansprüche, dadurch gekennzeichnet, dass aufgrund der mittels der Auswerteeinrichtung (3) ermittelten Messdaten die farbmetrischen Daten des Messobjekts (7) ermittelt werden.

28. Verfahren nach einem der vorhergehenden Ansprüche, dadurch gekennzeichnet, dass an einer hellen und/oder an einer dunklen Referenzprobe periodisch Referenzmessungen durchgeführt werden und dass die erfassten Werte als Referenzwerte abgespeichert und zur Kalibrietung der Messkette verwendet werden.

29. Vorrichtung zur Durchführung des Verfahrens nach einem der vorhergehenden Ansprüche, mit einer Beleuchtungseinrichtung (1) zum Beleuchten des Messobjekts (7), einer eine Linsenanordnung (21) sowie zumindest einen Bildsensor (22, 23) umfassenden Erfassungseinrichtung (2) zum Erfassen des vom Messkörpers (7) reflektierten Lichts (29) sowie einer Auswerteeinrichtung (3) zum Ermitteln der farbmetrischen Daten des Messobjekts (7), wobei ausgewählte Teile der Vorrichtung (21, 22, 23, 25) in einem Sondenkopf (5) aufgenommen sind, der für die Messung an das Messobjekt (7) heranzuführen ist, dadurch gekennzeichnet, dass die Beleuchtungseinrichtung (1) oder die optische Erfassungseinrichtung (2) einen Farbseparator (8) umfassen, welcher sichtbares Licht in unterschiedliche Wellenlängenbereiche unterteilt, und dass Mittel (3, 4, 22) zum Visualisieren der über die Erfassungseinrichtung (2) erfassten Messdaten vorgesehen sind.

30. Vorrichtung nach Anspruch 29, dadurch gekennzeichnet, dass zwei Bildsensoren (22, 23) vorgesehen sind, wobei der eine Bildsensor (23) zum Ermitteln der farbmetrischen Daten und der andere Bildsensor (22) zum Visualisieren des Messobjekts (7) vorgesehen ist.

31. Vorrichtung nach Anspruch 30, dadurch gekennzeichnet, dass der eine Bildsensor einen Farb-Chip (22) und der andere einen Schwarz-Weiss-Chip (23) aufweist.

32. Vorrichtung nach Anspruch 30 oder 31, dadurch gekennzeichnet, dass ein elektrischer Antrieb (25) vorgesehen ist, mittels welchem die beiden Bildsensoren (22, 23) in die Bildebene der Linsenanordnung (21) verschiebbar sind.

33. Vorrichtung nach einem der Ansprüche 29 bis 32, dass der Farbseparator (8) ein drehbares Beugungsgitter, ein drehbares Verlaufsfilter, ein drehbares Filterrad oder ein akustisch einstellbares, optisches Filter umfasst.

34. Vorrichtung nach einem der Ansprüche 29 bis 33, dadurch gekennzeichnet, dass die Beleuchtungseinrichtung (1) eine Lichtquelle (13) und ein von der Lichtquelle (13) in den Sondenkopf (5) führendes Lichtleiterfaserbündel (14) umfasst, wobei der Farbseparator (8) zwischen der Lichtquelle (13) und dem Lichtleiterfaserbündel (143) angeordnet ist.

35. Vorrichtung nach einem der Ansprüche 29 bis 34, dadurch gekennzeichnet, dass der Farbseparator (8) als Monochromator in Form eines mit einem Beugungsgitter versehenen, drehbaren Spiegels (10) ausgebildet ist.

36. Vorrichtung nach einem der Ansprüche 29 bis 35, dadurch gekennzeichnet, dass ein zwischen einer Ruhe- und einer Wirkstellung bewegbarer Spiegel (11) vorgesehen ist, welcher in der Wirkstellung zwischen der Lichtquelle (13) und dem Farbseparator (8) angeordnet ist.

37. Vorrichtung nach einem der Ansprüche 29 bis 36, dadurch gekennzeichnet, dass ein der Lichtquelle nachgeschaltetes UV-Sperrfilter (12) vorgesehen ist.

38. Vorrichtung nach einem der Ansprüche 29 bis 34, dadurch gekennzeichnet, dass als Farbseparator ein drehbares Filterrad mit einer Vielzahl von optischen Bandpassfiltern vorgesehen ist, welche kreisringförmig angeordnet sind und einen relativen Durchlassbereich zwischen 5 und 20 Nanometern für sichtbares Licht aufweisen.

39. Vorrichtung nach Anspruch 38, dadurch gekennzeichnet, dass das Filterrad zusätzlich ein UV-Sperrfilter und/oder einen lichtundurchlässigen Bereich aufweist.

40. Vorrichtung nach einem der Ansprüche 29 bis 39, dadurch gekennzeichnet, dass der Sondenkopf (5) auswechselbar ist.

41. Vorrichtung nach einem der Ansprüche 29 bis 40, dadurch gekennzeichnet, dass zumindest ein optischer Polarisator (18) zwecks Glanzunterdrückung vorgesehen ist.
